# EUROPEAN PATENT APPLICATION

(11) **EP 2 680 256 A1**
(43) Date of publication of application: **01.01.2014**
(21) Application number: 12382255.3
(22) Date of filing: 27.06.2012
(51) Int. Cl.: G10L 15/18

(54) **System and method to analyze voice communications**

(71) Applicant: JaJah Ltd, Ra'Anana (IL); Telefónica, S.A., 28013 Madrid (ES)
(72) Inventor: Neystadt, John, Ra'Anana (IL); Urdiales Delgado, Diego, 28013 Madrid (ES); Anguera Miro, Xavier, 28013 Madrid (ES)
(74) Representative: Cordina, Kevin John

(57) **Abstract**

A system and method to analyze a voice communication to identify at least one actionable item. The system includes a voice communication server configured to receive data representing speech related to the voice communication; a speech analysis engine in communication with the voice communication server, the speech analysis engine configured to analyze the data representing the speech to identify at least one actionable item; and an action assignment service configured to assign the at least one actionable item at least one action, the at least one action being executable on an end-user device. The at least one actionable item and the at least one assigned action may be displayed to a user at the end-user device.

## Description

### Technical Field

The present invention relates to systems and methods for analyzing voice communications.

### Background

Often during a voice call topics, such as names, dates etc., are discussed that require further follow-up or action. For example, during a telephone call between Alex and Beth it may be agreed that Alex is going to make a dinner reservation at Xena's restaurant for this evening. Once the call between Alex and Beth is complete, Alex may want to call Xena's restaurant to make the reservation and add a calendar appointment for the dinner.

However, in present systems, after a call has been completed a party is provided with very little information, if any, about the call. If information is provided it is typically limited to the identity of the parties and the duration of the call. Parties to the call are not generally provided with any information as to the content of the call, let alone the ability to automatically take action based on the content of a call. Currently if a party wants to take any action based on the content of a call they must manually record the relevant information and then manually take any necessary action. For example, in the example situation described above, Alex would have to manually record the name of the restaurant, look up the number for the restaurant and then call the restaurant. It would be advantageous for at least some of these tasks to be automated.

There is therefore a requirement for a system to address the shortcomings of current systems.

The embodiments described below are not limited to implementations which solve any or all of the disadvantages of known methods and systems.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a first aspect there is provided a system to analyze a voice communication to identify at least one actionable item, the system comprising: a voice communication server configured to receive data representing speech related to the voice communication; a speech analysis engine in communication with the voice communication server, the speech analysis engine configured to analyze the data representing the speech to identify at least one actionable item; an action assignment service configured to assign the at least one actionable item at least one action, the at least one action being executable on an end-user device.

In a second aspect there is provided a computer-implemented method to analyze the content of a voice communication to identify at least one actionable item, the method comprising: receiving data from a telecommunication network at a voice communication server, the data representing speech related to the voice communication; analyzing the data using a speech analysis engine to identify one or more actionable items; assigning using an action assignment service the at least one actionable item at least one action; and outputting to the user at an end-user device the at least one actionable item and the at least one assigned action.

In a third aspect there is provided an end-user device to provide one or more actions to a user based on the content of a voice communication, the end-user device comprising: a communications interface configured to receive at least one actionable item for the voice communication; a processor configured to assign the at least one actionable item at least one action, the at least one assigned action being executable on the end-user device; a display device configured to display the at least one actionable item and the at least one assigned action; and a user input device configured to receive input from a user to cause one of the at least one assigned action to be executed by the end-user device.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a schematic block diagram of a system for analyzing a voice communication to identify one or more actionable items;
Figure 2 is a schematic block diagram of the speech analysis engine of Figure 1;
Figure 3 is a schematic of the end-user device of Figure 1 displaying actionable items and assigned actions;
Figure 4 is a method for analyzing a voice communication to identify one or more actionable items using the system of Figure 1; and
Figure 5 is a block diagram of an exemplary end-user device of Figure 1.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

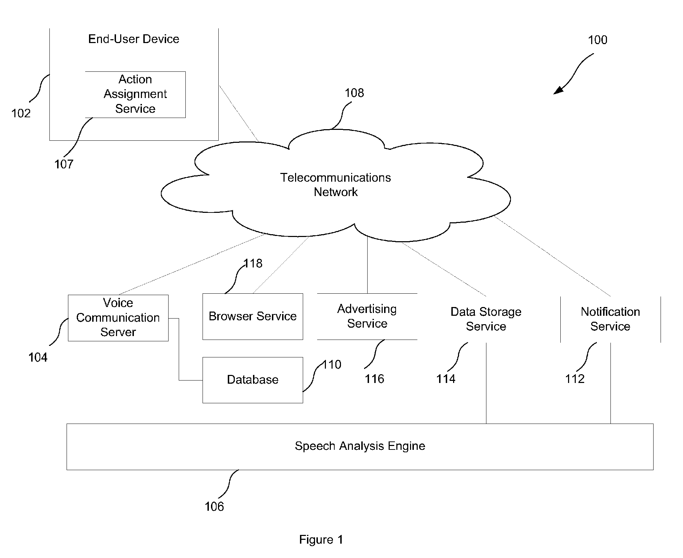

Figure 1 shows a block diagram of a system 100 for analyzing a voice communication to identify one or more actionable items. The system 100 includes an end-user device 102 for establishing a voice communication, a voice communication server 104 for receiving data representing speech related to the voice communication, a speech analysis engine 106 for analyzing the data to identify one or more actionable items (or tags), and an action assignment service 107 for assigning the actionable items one or more actions. The end-user device 102 then receives the actionable items and assigned actions and presents them to the user in a manner that allows the user to easily invoke the actions.

The end-user device 102 allows the user to make or receive voice communications over a telecommunications network 108. The term "voice communication" is used herein to indicate any communication that allows a user to make and/or receive audio and is intended to include, but is not limited to, telephone calls, teleconference calls, video calls and voicemails. As will be apparent, where the techniques described herein are applied to video calls they are applied to the audio part of the communications.

The end-user device 102 may be a smart phone or may be a computer system configured to provide telephony functions to a user (for example a 'softphone' provided by an application running on a personal computer (PC) or portable computing device, or via a Web Browser on such device). The telephony functions are typically provided by communications applications running on the end-user device 102 which may be either installed applications from third parties or native applications provided as part of the device's operating system. For example, the end-user device 102 may be provided with a voice-over-IP (VolP) client to conduct VolP calls. As will be appreciated various combinations of telephony types may be utilized as is known in the art (for example, conventional telephony to VolP calls).

The telecommunications network 108 may be any network, or combination of networks, capable of establishing a voice communication between end users. For example, the telecommunications network 108 may be a public switched telephone network (PSTN), a mobile telephone network, a data network (such as the Internet), a VolP network or any combination thereof.

When a voice communication is made to or from an end-user device 102 subscribing to the relevant service, voice communication server 104 receives data representative of the speech of the voice communication from the telecommunications network 108. In some cases the voice communication server 104 is also responsible for establishing the voice communication over the telecommunications network 108. In other cases the voice communication server 104 is merely in communication with the equipment responsible for establishing the voice communication. Once the voice communication server 104 has received the data it forwards the data to the speech analysis engine 106 for analysis.

The voice communication server 104 typically receives audio signals for the voice communication from the telecommunications network 108. In some cases, the voice communication server 104 forwards the audio signals to the speech analysis engine 106 so that the speech analysis engine 106 can perform the analysis in real time. In others cases, the voice communication server 104 records the received audio signals as audio data files and forwards the audio data files to the speech analysis engine 106. A copy of the recorded data may also be archived in a storage device, such as database 110, for future reference. Where this is the case, data is also stored in the database 110 to identify the voice communication and link it to the appropriate user. Further information on the voice communication, for example timing and participants, may also be stored in the database 110. To enable independent analysis of the parties each side of a voice communication may be recorded separately.

Depending on the user's settings, data related to all or only a subset of the user's voice communications may be forwarded to the speech analysis engine 106. For example, the user may configure the system 100 to analyze only outgoing voice communications, only incoming voice communications, or only voice communications to and/or from a specific user or set of users. Furthermore, the system 100 may be configured to only analyze one side of a voice communication.

Speech analysis engine 106 is in communication with the voice communication server 104 and is configured to receive the speech data from the voice communication server 104 and analyze the data to identify actionable items. The term "actionable item" is used herein to mean words and/or phrases that can be used to trigger one or more actions on the end-user device 102. For example, actionable items, may include, but are not limited to, locations (e.g. towns, addresses, business names), times (e.g. dates, times, days of the week), contacts (e.g. names, phone numbers, email addresses) and brand names (e.g. movies, products, and services).

An exemplary method for identifying keywords, such as actionable items, in audio data that may be implemented by speech analysis engine 106 is described in Spanish Patent Application No. P201130858 herein incorporated by reference.

In some cases the speech analysis engine 106 may identify actionable items by comparing the speech against a model list of words and phrases. The model list of words and phrases may be based on: a static keyword list, such as, but not limited to, "tomorrow", "contact", "name", "town", "street"; a dynamic list of keywords, such as, but not limited to, specific people and places; a list of patterns such as dates, times or regular expressions; or any combination thereof.

In other cases the speech analysis engine 106 may also use a formal semantic and syntactic model to identify the actionable items. For example, the speech analysis engine 106 may compare the speech against a model list of words and phrases (e.g. a place name) and identify any located word/phrase as an actionable item based on the syntactical function the word/phrase performs in the sentence (e.g. if the place name is part of a place adverbial). Alternatively, the speech analysis engine 106 may use semantic and syntactic criteria for disambiguation when determining whether to identify a polysemous word or sentence as an actionable item (e.g. "I'm traveling to Australia this summer" versus "Yesterday I was watching *Australia,* featuring Nicole Kidman).

In still other cases, the speech analysis engine 106 may identify actionable items by a combination of any of these methods.

The speech analysis engine may comprise a speech recognition engine; a keyword spotting engine; detectors for important words/segments in the data; or any combination thereof. A speech recognition engine may attempt to provide a textual representation of the voice communication audio, word for word, and do textual analysis on that textual representation. A word spotting engine may attempt to match parts of the voice communication to specific preconfigured words or phrases which can be identified as actionable items. A detector may measure the excitement level at each particular point, on repetitions or particular information units, on intonation analysis or others.

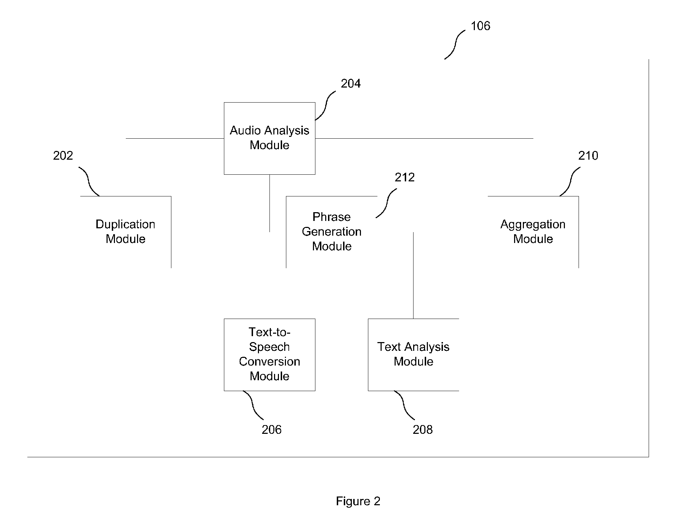

An exemplary speech analysis engine 106 is described in reference to Figure 2.

Once the speech analysis engine 106 has identified actionable items, the actionable items are provided to the action assignment service 107 to be assigned one or more actions.

In some cases, actionable items are provided to the action assignment service 107 upon receiving a request from the action assignment service 107. For example, the speech analysis engine 106 may provide the actionable items or tags to a storage service, such as data storage service 114. The actionable items are stored by the data storage service 114 with suitable indexing to relate the actionable items to the particular voice communication. Other data may also be stored to allow the actionable items to be related to the particular user or other parameters.

The data storage service 114 may be configured to only store the actionable items temporarily. For example, the actionable items may be automatically deleted by the data storage service 114 after they have been provided to the user; or if a request has not been received for the actionable items within a predetermined amount of time.

When the data storage service 114 receives a request from the action assignment service 107 for actionable items for a particular voice communication the data storage service 114 searches the stored data to determine if there are any actionable items for the identified voice communication. If no actionable items are found for the particular voice communication then the data storage service 114 transmits a notification message to the action assignment service 107 indicating that no actionable items were identified. Alternatively, if at least one actionable item is found for the particular voice communication then the data storage service 114 transmits the identified actionable items to the action assignment service 107.

In some cases, the system 100 may be configured to automatically notify the action assignment service 107 if actionable items have been identified by the speech analysis engine 106 for a particular voice communication. For example, the speech analysis engine 106 may be in communication with a notification service 112. The notification service 112 receives data from the speech analysis engine 106 and generates and transmits a notification to the action assignment service 107. For example, once the speech analysis engine 106 has analyzed the speech data and identified at least one actionable item, the speech analysis engine 106 may transmit a message to the notification service 112 and the notification service 112 then transmits a message to the action assignment service 107 indicating that at least one actionable item has been identified in the voice communication. The notification service 112 may use any appropriate message format to notify the user. For example, the notification service 112 may transmit an SMS message or Apple/Android style push notification indicating that at least one actionable item has been identified.

In other cases, the actionable items are provided to the action assignment service 107 automatically. For example, once the speech analysis engine 106 has analyzed the speech data and identified at least one actionable item, the speech analysis engine 106 may transmit the actionable items to the notification service 112 and then the notification service 112 transmits the actionable items to the action assignment service 107.

Notification service 112 is shown in Figure 1 as a discrete service, but it may be integrated with other parts of the system 100 as appropriate. In certain embodiments, the notification service 112 may be omitted without affecting the operation of the remaining parts of the system.

The speech analysis engine 106 may also archive the actionable items or tags in a storage device, such as database 110, so they can be viewed and/or analyzed at a later date.

Upon completion of the voice communication (e.g. at the end of a voice call), during the voice communication, or during playback of the voice communication (e.g. during playback of a voicemail) the action assignment service 107 obtains the actionable items identified by the speech analysis engine 106. The action assignment service 107 may automatically receive the actionable items (i.e. the actionable items are pushed to the action assignment service 107) or, alternatively the action assignment service 107 may be configured to request the actionable items (i.e. the action assignment service 107 pulls the actionable items).

In some "pull" cases the action assignment service 107 may automatically request any actionable items upon completion of the voice communication (e.g. at the end of a voice call). For example, the action assignment service may automatically send a request to the data storage service 114 for any actionable items identified by the speech analysis engine 106 as soon as the voice communication is complete. In other "pull" cases, the action assignment service 107 may only request actionable items if the action assignment service 107 receives an indication that actionable items have been identified. For example, as described above, the notification service 112 may automatically notify the action assignment service 107 if any actionable items were identified in the voice communication.

In either case, a request for the actionable items may only be transmitted if the user authorizes the request. For example, upon completion of the voice communication (e.g. at the end of a voice call), the user may be given the option to retrieve/display any actionable items and only if the user chooses to retrieve any actionable items is the request transmitted from the action assignment service 107 to the data storage service 114.

Once the action assignment service 107 receives the actionable items identified by the speech analysis engine 106 the action assignment service 107 assigns the actionable items one or more actions that can be executed on the end-user device 102. Accordingly, the actions may be assigned to the actionable items based on the capabilities of the end-user device 102. For example, where the end-user device 102 is a smart phone, the actions that may be assigned to the actionable items may include, but are not limited to, opening contact details from the address book, showing a location on a map, creating an event in the calendar, triggering a local search in the end-user device 102 or a global search on the Internet, and opening an application.

The actions may also be assigned to the actionable items based on the configuration of the action assignment service 107. For example, the action assignment service 107 may be configured for particular commercial interests. For example, if the speech analysis engine 106 identifies an artist's name, the action assignment service 107 may assign some actions by default (e.g. based on the capabilities of the end-user device 102), such as searching on the web, and some actions based on its configuration, such as buying concert tickets from a specific ticketing platform or downloading the artist's album for a specific music download service.

Each actionable item identified by the speech analysis engine 106 may be assigned one, more than one, or no actions. For example, in some cases an actionable item identified by the speech analysis engine 106 will not be compatible with the actions available on the particular end-user device 102. For example, the speech analysis engine 106 may identify a place, such as a retail store, as an actionable item. A place may be assigned an action such as showing the location on a map; getting directions; or searching the web. If, however, the end-user device 102 does not have access to the Internet to be able to perform these actions, the particular actionable item may not be assigned an action.

In other cases, an actionable item may be assigned more than one action. For example, where the actionable item is a contact name it may be assigned one or more of the following actions: open the contact details from the address book; call the contact; send the contact a text message or send the contact an email.

In some cases, actionable items are classified into categories and the actions that may be assigned to a particular actionable item are based on the category. For example, each actionable item may be classified into one of the following categories: places (i.e. place names and physical addresses); contacts (i.e. contact names, phone numbers and email addresses); events (i.e. event names and times); other (i.e. brand names and other keywords). In some cases the action assignment service 107 may classify or categorize the actionable items. In other cases the speech analysis engine 106 may classify or categorize the actionable items.

Actionable items that are classified as places (i.e. place names and physical addresses) may have, for example, one or more of the following actions assigned to them: showing the location on a map; get directions; search the web; assign address to contact list.

Actionable items that are classified as contacts (i.e. contact names, phone numbers and email addresses) may have, for example, one or more of the following actions assigned to them: open contact details from address book; call the contact; send the contact a text message; send the contact an email; create a new contact; and add the details to an existing contact.

Actionable items that are classified as events (i.e. event names and times) may have, for example, one or more of the following actions assigned to them: create an event in the calendar; look up an event in the calendar; RSVP to an existing event; find an external event in Facebook™ or another social networking service; and look for event details through a web search.

Actionable items that are classified into the other category (i.e. brand names and other keywords) may have, for example, one or more of the following actions assigned to them: go to brand website; perform a web search on the keyword; and offer to buy a relevant product or service online.

The action assignment service 107 may support plug-ins where each plug-in may add new actionable item categories and/or new actions for the actionable item categories.

The action assignment service 107 is typically provided by an application running on the end-user device 102 which may be either an installed application from third parties or a native application provided as part of the device's operating system. For example, the end-user device 102 may be provided with an actionable item client application to perform the action assignment services. However, in other cases the action assignment service 107 may be separate from the end-user device 102. For example, the action assignment service 107 may run on a server operated by the telecommunications provider. The actions assigned to the actionable items may then be provided to the end-user device 102 in any manner described above with respect to transmission of the actionable items (i.e. via notification service 112 or data storage service 114).

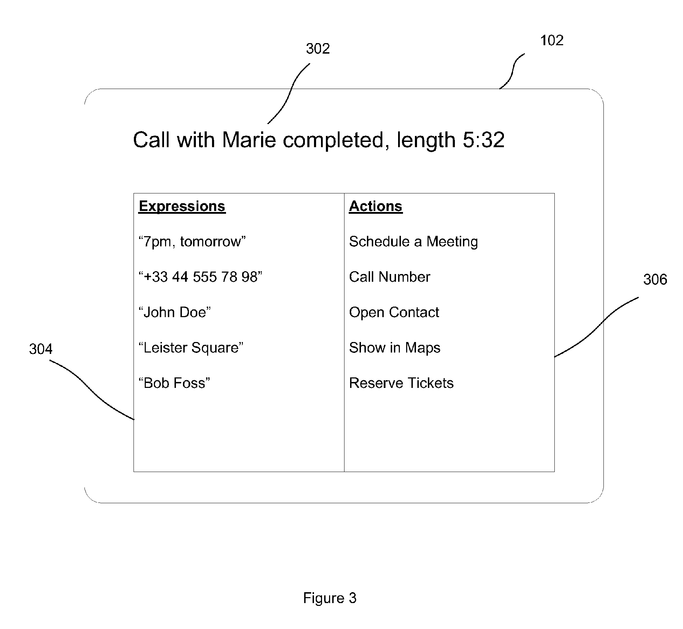

Once the actionable items have been assigned one or more actions, the actionable items and assigned actions are output to the user via the end-user device 102. For example, the actionable items and their actions may be displayed to the user on a display device of the end-user device 102. The actionable items and their assigned actions are typically presented to the user in a manner that makes it easy for the user to invoke the assigned actions. For example, the assigned actions may be displayed in such as manner that selecting the action will automatically invoke the action. An exemplary user interface for displaying the actionable items and assigned actions is described in reference to Figure 3.

The system 100 may also include an advertising service 116 that is in communication with the end-user device 102 to allow businesses to provide advertisements to the end-user device 102 that are related to the actionable items identified in the voice communication. In some cases, the end-user device 102 may be configured to provide the actionable items to the advertising service 116. The advertising service 116 then provides one or more advertisements to the end-user device 102 based on the received actionable items. The end-user device 102 then displays or outputs the received advertisements near the actionable items.

The advertisements may be, for example, a display advertisement, a link to a website, a coupon or other promotion details related to particular actionable items. For example, the advertising service 116 may provide the end-user device 102 with any advertisements related to actionable items that identify place names (e.g. business name or address), event names or brand names. For example, if an actionable item identifies a music concert then the advertising service may provide the end-user device 102 with a link to the ticketing website for that concert.

The system 100 may also include a browser service 118 that is in communication with the database 110 and the end-user device 102 to allow a user to browse the archived voice communications and actionable items. For example, an application or web browser on the end-user device 102 may display a list of all voice communications over a particular time period. Data relating to the timing and parties to the voice communications may be displayed as retrieved from the database 110 in addition to any actionable items identified in the voice communication. The user can therefore view data indicating the actionable items identified in the voice communication in addition to conventional data on the time and parties. The end-user device 102 may also be configured to assign any identified actionable items one or more actions and to display the assigned actions. Options may be provided to replay the audio of a voice communication. Search/filtering functions may be provided to allow a user to display only certain types of voice communications (e.g. only voice calls or only voicemails).

The term "service" is used to indicate a program or system which provides certain functions. For example, a notification service may provide the function of sending notifications between two entities. The service may take the form of a program running on a single computer system, or may be provided by a plurality of computing systems configured to work together to provide the functions. The functions may be accessed and utilized via a network system, for example the Internet. Any service may be implemented in any way known to the person of skill in the art. Although the various services have been described separately, one or more of the services may be provided as part of a single service, or by a single program of a computer system.

Where the term "connected" has been utilized in this document, it is not intended to require a permanent, always-on, connection. Rather it is used in the sense that the connected entities are connected, when required, to exchange data. For example, two entities would be connected by the transmission of data from one entity to another through an IP network.

Reference is now made to Figure 2 which illustrates a block diagram of an exemplary speech analysis engine 106 for analyzing the data to identify actionable items. The speech analysis engine 106 of Figure 2 performs both audio and textual analysis of the data. Specifically, it analyzes the audio to identify actionable items and it also transcribes the audio into text and analyzes the text to identify actionable items. The actionable items identified by the audio and textual analysis are then aggregated.

The speech analysis engine 106 comprises a duplication module 202 that receives the speech data from the voice communication server 104 and duplicates the data. One set of data is sent to an audio analysis module 204 configured to analyze the audio to identify actionable items. The other set of data is sent to a speech-to-text conversion module 206 configured to convert the audio into text. The text is than transferred to a text analysis module 208 configured to analyze the text to identify actionable items. The actionable items identified by the audio analysis module 204 and the text analysis module 208 are then provided to an aggregation module 210 that aggregates the actionable items and then transmits the aggregated list of actionable items to the data storage service 114 and/or the notification service 112.

Both the audio analysis module 204 and the text analysis module 208 may be in communication with a phrase module 212 that is configured to generate a list of phrases to be found in the data. The phrases may be generated by the phrase module 212 based on a list of keywords stored in a keyword module (not shown). The keyword module may include a static list of words that may be relevant to particular users. The keyword module may also utilize a number of data sources to dynamically update the list of keywords. An exemplary method and system for utilizing a number of data sources to dynamically update a list of keywords is described in International Patent Application No. PCT/EP2012/059832 herein incorporated by reference.

For example, the keyword module may be in communication with one or more social networks which it accesses to obtain data which are used as keywords. A range of aspects of the social network may contain keywords that are relevant to likely speech for the user, for example, names of people the user contacts or is linked to, locations or places mentioned in relation to the user or where they have 'checked in', events subscribers are linked to, general information in the user's profile, groups the user is a member of, and descriptions and addresses of pages the subscriber has expressed an interest in.

The keyword module may also be in communication with a user's contact list in a communication device being used to make calls, and also contact lists in computers or systems also used by the user.

The keyword module may also be in communication with a communication archive that may comprise archives of communications such as emails and instant messages. Data such as the subject, content, and destination of messages in the communication archives may provide relevant keywords.

The keyword module may also be in communication with a business information system such as enterprise directories (e.g. LDAP directories and similar), intranet information stores, databases, and internet sites. Data such as employee names, departments, projects, customers, and partners may be extracted and form the basis of relevant keywords.

The keyword module may also be in communication with public information sources such as search services, public information provided by social networks, and information sites such as news providers and entertainment lists. Such information sources may provide indications of currently popular topics which are more likely to be discussed in conversation and therefore may present keywords.

Reference is now made to Figure 3 which illustrates an end-user device 102 user interface for displaying a plurality of actionable items and assigned actions. The user interface is divided into three sections - a general information section 302, an expression section 304 and an action section 306. The general information section 302 displays general information about the voice communication, such as, but not limited to, the identity of the other party (or parties) to the voice communication and the duration of the voice communication. For example, in Figure 3, the general information section 302 displays that the voice communication was with "Marie" and it lasted 5 minutes and 32 seconds.

The expression section 304 displays the actionable items identified by the speech analysis engine 106. For example, in Figure 3, the expression section 304 displays five actionable items: "7pm, tomorrow", "+33 44 555 78 98", "John Doe", "Leister Square" and "Bob Foss". All of these expressions would have been mentioned during the voice communication. In some cases the expression section 304 displays only those actionable items which have been assigned an action. In other cases, the expression section 304 displays all actionable items identified by the speech analysis engine 106 regardless of whether they were assigned an action.

The action section 306 displays the actions assigned to the actionable items listed in the expression section 304. For example, in Figure 3, the action section 306 displays five actions, "Schedule a Meeting", "Call Number", "Open Contact", "Show in Maps", and "Reserve Tickets", one for each actionable item in the expression section 304. Although the actionable items are shown as being assigned only one action each, it is possible for actionable items to be assigned multiple actions. Where an actionable item is assigned more than one action the actionable item may be listed multiple times in the expression section 304, once for each assigned action. Alternatively, an actionable item assigned multiple actions may be listed once with a main action, and then the user can access the other assigned actions via the main action.

Preferably each displayed action is linked to means that allows the user to invoke the action by selecting the action. For example, where the display is a touch screen, the user may be able to invoke a desired action by touching the desired action. For example, where the display is a touch screen, the user may be able to initiate a call to number +33 44 555 78 98 by touching or otherwise selecting "Call Number".

Where a displayed action is assigned multiple actions, the actionable item may be displayed with a main action which allows the user to activate or invoke the main action or access one or more sub-actions. For example, where the actionable item is a contact name, the actionable item may be assigned the following actions: display the contact; text the contact; call the contact; and email the contact. The main action may be "display the contact" and the sub actions may be "text the contact", "call the contact" and "email the contact". In this case the contact information may be displayed alongside the "display the contact" action. The user may then invoke the main action ("display the contact") by performing one action on the main action (e.g. touching or tapping it), and the user may access the sub actions ("text the contact", "call the contact", and "email the contact") by performing another action on the main action (e.g. touching and holding it). An action that has one or more sub-actions may be identified by a special symbol, such as an asterisk or the like, so that the user is aware that there are sub-actions associated with the actionable item.

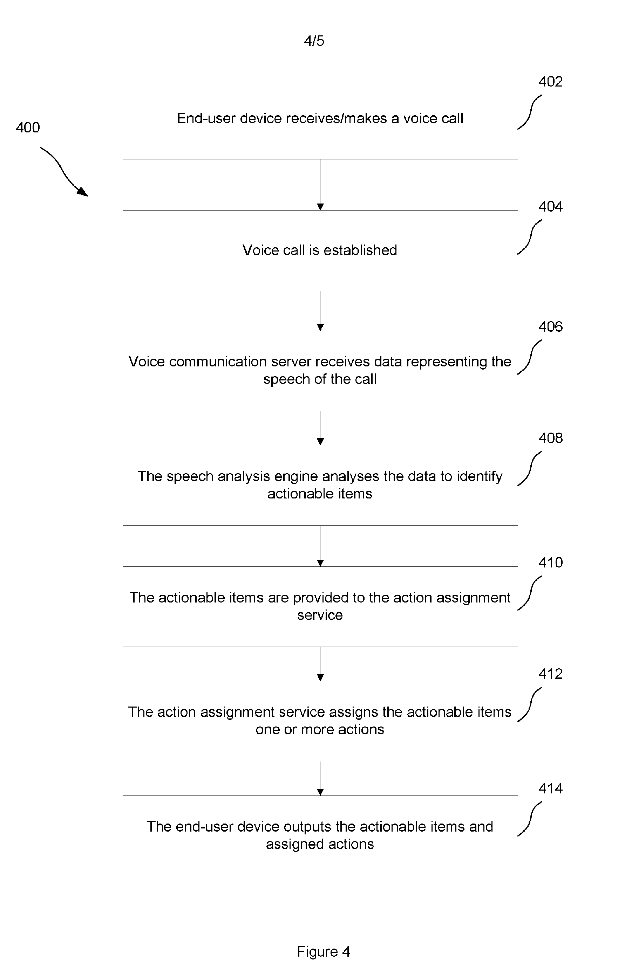

Reference is now made to Figure 4 which illustrates a method 400 for analyzing voice communications to identify one or more actionable items using the system of Figure 1.

At step 402, a voice communication is received or made at the end-user device 102. At step 404, the voice communication is established over the telecommunications network 108 using any known method.

At step 406, the voice communication server 104 receives data representing the speech of the voice communication and forwards the data to the speech analysis engine 106 for analysis. As described above, the voice communication server 104 may record the audio signals as audio files and then forward the audio files to the speech analysis engine 106. It other cases the voice communication server 104 may provide the audio signals to the speech analysis engine 106 so that the analysis can be conducted in real-time.

At step 408, the speech analysis engine 106 analyzes the speech data to identify one or more actionable items. As described above, the speech analysis engine 106 may use one or more techniques to identify the actionable items. For example, the speech analysis engine 106 may receive a list of model phrases and may analyze both the audio and a text transcription of the audio to locate the phrases.

At step 410, the one or more actionable items identified by the speech analysis engine 106 are provided to the action assignment service 107. As described above, the actionable items may be provided to the action assignment service 107 automatically, or only after the end-action assignment service 107 has made a request for the actionable items. Such a request may be made automatically upon completion of the voice communication (e.g. at the end of a voice call). Alternatively, the request may be made by the action assignment service 107 only after receiving notification that at least one actionable item has been identified by the speech analysis engine 106.

At step 412, the action assignment service 107 assigns the actionable items one or more actions that can be executed on the end-user device 102. As described above, the actionable items may be classified into categories and the list of actions that may be assigned with a particular actionable item may be based on the category.

At step 414, the end-user device 102 outputs the actionable items and assigned actions. For example, the end-user device 102 may display the actionable items and assigned actions to the user on a display device associated with or attached to the end-user device 102. The end-user device 102 typically presents the actionable items and assigned actions in a manner that allows the user to easily invoke any of the actions. For example, the end-user device 102 may display each assigned actions with an associated link which if activated by the user invokes the action. For example, if the end-user device 102 is a touch screen the actions may be displayed in such a manner that when touched or selected by the user the selected action will be executed on the end-user device 102.

The system and method described with reference to Figures 1 and 4 thereby provide a system capable of analyzing a voice communication and presenting the user with one or more actions based on the analysis that may be invoked by the user.

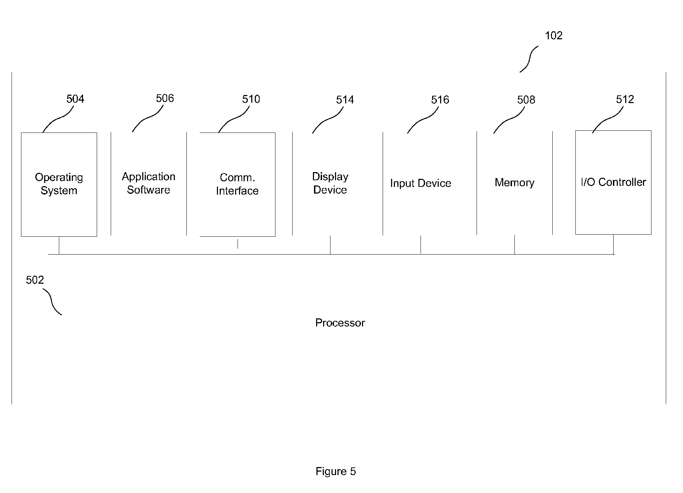

Reference is now made to Figure 5 which illustrates an exemplary end-user device 102 which may be implemented as any form of a computing and/or electronic device, and in which embodiments of the foregoing description may be implemented.

End-user device 102 comprises one or more processors 502 which may be microprocessors, controllers or any other suitable type of processors for processing computer executable instructions to control the operation of the device in order to run applications, such as communication applications and actionable items analysis applications referred to herein. In some examples, for example where a system on a chip architecture is used, the processors 502 may include one or more fixed function blocks (also referred to as accelerators) which implement a part of the method of operation of the end-user device 102 or applications described herein in hardware (rather than software or firmware). Platform software comprising an operating system 504 or any other suitable platform software may be provided at the end-user device 102 to enable application software 506 to be executed on the device. The computer executable instructions may be provided using any computer-readable media that is accessible by end-user device 102. Computer-readable media may include, for example, computer storage media such as memory 508 and communications media. Computer storage media, such as memory 508, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 508) is shown within the end-user device 102 it will be appreciated that the storage may be distributed or located remotely and accessed via a network or other communication link (e.g. using communication interface 510).

The end-user device 102 also comprises an input/output controller 512 arranged to output display information to a display device 514 which may be separate from or integral to the end-user device 102. The display information may provide a graphical user interface. The input/output controller 512 is also arranged to receive and process input from one or more devices, such as a user input device 516 (e.g. a mouse or a keyboard). This user input may be used to the communications and actionable items applications. In an embodiment the display device 514 may also act as the user input device 516 if it is a touch sensitive display device. The end-user device 102 may also be provided with other functionality as is known for such devices. For example, the communication interface 510 may comprise a radio interface to a mobile telephone or other wireless communications system, and microphone, speaker, and camera may be provided for voice and video calling.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A system to analyze a voice communication to identify at least one actionable item, the system comprising:
a voice communication server configured to receive data representing speech related to the voice communication;
a speech analysis engine in communication with the voice communication server, the speech analysis engine configured to analyze the data representing the speech to identify at least one actionable item; and
an action assignment service configured to assign the at least one actionable item at least one action, the at least one action being executable on an end-user device.

2. The system according to claim 1, further comprising a notification service in communication with the speech analysis engine and the action assignment service, the notification service configured to receive the at least one actionable item from the speech analysis engine and to automatically forward the at least one actionable item to the action assignment service.

3. The system according to claim 1, further comprising a data storage service in communication with the speech analysis engine and the action assignment service, the data storage service configured to store the at least one actionable item and transmit the stored at least one actionable item to the action assignment service in response to receiving a request from the action assignment service.

4. The system according to any preceding claim, wherein at least one of the speech analysis engine and the action assignment service is further configured to assign each actionable item to one of a plurality of categories and the assignment of at least one action to an actionable item is based on the assigned category of the actionable item.

5. The system according to any preceding claim, further comprising outputting to the user at the end-user device the at least one actionable item and the at least one assigned action, wherein selection of an action of the at least one assigned action by a user causes the end-user device to execute the selected action.

6. The system according to any preceding claim, further comprising an advertising service in communication with the end-user device, the advertising service configured to provide the end-user device at least one advertisement related to the at least one actionable item.

7. The system according to any preceding claim, wherein each of the at least one actionable item is one of a location, a time, contact information, and a brand name.

8. A computer-implemented method to analyze the content of a voice communication to identify at least one actionable item, the method comprising:
receiving data from a telecommunications network at a voice communication server, the data representing speech related to the voice communication;
analyzing the data using a speech analysis engine to identify one or more actionable items;
assigning using an action assignment service the at least one actionable item at least one action; and
outputting to the user at an end-user device the at least one actionable item and the at least one assigned action.

9. The method according to claim 8, further comprising assigning each of the at least one actionable item to one of a plurality of categories and wherein the assignment of at least one action to a particular actionable item of the at least one actionable item is based on the assigned category of the particular actionable item.

10. The method according to claim 8 or claim 9, further comprising selecting one of the at least one assigned action to cause the end-user device to execute the selected action.

11. The method according to any one of claims 8 to 10, further comprising:
selecting using an advertising service at least one advertisement related to the at least one actionable item;
transmitting the at least one advertisement from the advertising service to the end-user device; and
outputting to the user at the end-user device the at least one advertisement.

12. The system according to any preceding claim, wherein each of the at least one actionable item is one of a location, a time, contact information, and a brand name.

13. An end-user device to provide one or more actions to a user based on the content of a voice communication, the end-user device comprising:
a communications interface configured to receive at least one actionable item for the voice communication;
a processor configured to assign the at least one actionable item at least one action, the at least one assigned action being executable on the end-user device;
a display device configured to display the at least one actionable item and the at least one assigned action; and
a user input device configured to receive input from a user to cause one of the at least one assigned action to be executed by the end-user device.

14. The end-user device according to claim 13, wherein each of the at least one actionable item is assigned to one of a plurality of categories and the assignment of at least one action to a particular actionable item of the at least one actionable item is based on the assigned category of the particular actionable item.

15. The end-user device according to claim 13 or claim 14, wherein the communications interface is further configured to receive at least one advertisement related to the at least one actionable item, and the display device is further configured to display the at least one advertisement.
